# EUROPÄISCHE PATENTSCHRIFT

(11) **EP 1 494 558 B1**
(45) Veröffentlichungstag und Bekanntmachung des Hinweises auf die Patenterteilung: **13.09.2006**
(21) Anmeldenummer: 02740261.9
(22) Anmeldetag: 12.04.2002
(51) Int. Cl.: A44B 11/12, B60P 7/08

(54) **GURTSCHNALLE FÜR EINEN BEFESTIGUNGSGURT**
STRAP BUCKLE FOR A FASTENING STRAP
BOUCLE DE CEINTURE POUR CEINTURE DE FIXATION

(30) Priorität: 12.04.2001 DE 10119469
(43) Veröffentlichungstag der Anmeldung: 12.01.2005
(73) Patentinhaber: MSA Auer GmbH, 12059 Berlin (DE)
(72) Erfinder: BOSS, Jürgen, 10559 Berlin (DE); KLING, Peter, 12101 Berlin (DE)
(74) Vertreter: Wablat, Wolfgang
(86) Internationale Anmeldenummer: PCT/DE2002/001438
(87) Internationale Veröffentlichungsnummer: WO 2002/082938

(56) Entgegenhaltungen:
- EP-A- 0 906 732
- DE-A- 19 541 286
- US-A- 4 395 796
- US-A- 4 796 336

## Beschreibung

Die Erfindung betrifft eine Gurtschnalle für Befestigungsgurte, bestehend aus einem Spannhebel, an dem das freie Gurtbandende über einen Klemmsteg verklemmbar ist und einem an dem Spannhebel schwenkbar gehaltenen Spannbügel, an dem das andere Gurtbandende fixiert ist.

Bekannt sind, z. B. aus der DE-A-19541286, Gurtschnallen für Befestigungsgurte, bei denen ein Spannbügel schwenkbar in einem Spannhebel gelagert ist. Während ein Gurtbandende am Spannbügel dauerhaft befestigt ist, wird das andere Gurtbandende nach Umschlingung eines Haltestegs an einem Klemmsteg im Spannhebel verklemmt. Der Klemmsteg kann zur sicheren Befestigung des variablen Gurtbandendes mit einer gezackten Oberfläche versehen sein. Das Gurtband wird gespannt, indem das variable Ende des Gurtbands zunächst bei aufgeklappter Gurtschnalle manuell angezogen wird. Anschließend erfolgt eine weitere Gurtbandverspannung durch das Zusammendrücken von Spannhebel und Spannbügel. Die Gurtschnalle wird z. B. durch seitlich angebrachte Arretierungsnasen in der zusammengeklappten Position gehalten.

Aufgrund der beschriebenen Umschlingung durch das variable Gurtbandende kommt es bei den bekannten Gurtschnallen für Befestigungsgurte zu Nachteilen. Die sichere Fixierung des variablen Gurtbandendes verlangt eine Umschlingung der Stege, die ein Einstellen der Gurtbandlänge nur im Sinne einer Verkürzung des für das Spanngut zur Verfügung stehenden Gurtbandteils möglich macht. So ist eine Verlängerung dieses Gurtbandteils bei einem Wechsel auf ein größeres Spanngut sehr umständlich, da zuvor die Umschlingung der Klemmstege, die sich im aufgeklappten Zustand noch vergrößert, gelockert werden muss. Insbesondere bei einer Tätigkeit mit Arbeitshandschuhen ist ein solcher Prozess oft nur unter Zuhilfenahme eines Werkzeugs möglich. Ein weiteres Problem ergibt sich, wenn das variable Gurtbandende im aufgeklappten Zustand der Gurtschnalle manuell zu fest angezogen wird: Das Lösen des Gurtbandes in der Gurtschnalle ist dann nur unter großen Schwierigkeiten möglich, da sich das Gurtband reibschlüssig verklemmt. In dieser Situation, bei der das variable Ende des Gurtbandes manuell derart vorgespannt ist, lässt sich die Gurtschnalle nicht mehr zusammenklappen. Angesichts des Einsatzes der Gurtschnalle u. a. zur Befestigung von Atemluftflaschen bei Katastropheneinsätzen ist eine schnelle und problemlose Bedienbarkeit aber auch bei falscher Handhabung unbedingt erforderlich.

Der Erfindung liegt die Aufgabe zugrunde, eine gattungsgemäße Gurtschnalle für Befestigungsgurte zu entwickeln, die einfach handhabbar ist. Insbesondere sollte eine Verlängerung des für das Spanngut zur Verfügung stehenden Gurtbandteils auch beim Tragen von Arbeitshandschuhen und ohne die Verwendung eines Werkzeugs leicht möglich sein.

Ausgehend vom Stand der Technik wird die Aufgabe erfindungsgemäß dadurch gelöst, dass an dem Spannhebel ein bewegliches Klemmelement angeordnet ist, das in eine Klemmstellung bewegbar und in dieser gehalten ist, in der das Gurtband zwischen dem Klemmelement und dem Spannhebel verklemmt ist, sowie in eine Lösestellung bewegbar ist, bei der das Gurtband im wesentlichen frei zwischen dem Klemmelement und dem Spannhebel verläuft.

Die durch die Erfindung erzielbare definierte Klemm- und Lösestellung ermöglicht ein einfaches Anpassen der Gurtbandlänge an unterschiedliche Spanngutumfänge in der Lösestellung. Auch bei einem manuell zu fest vorgespannten Gurtband lässt sich die übermäßige Spannung durch das Bewegen des Klemmelements in die Lösestellung reduzieren. Die Klemmstellung bietet eine Sicherheit gegen ein Lockern des Gurtbandes im offenen und geschlossenen Zustand der Gurtschnalle.

In einer bevorzugten Ausführungsform der Erfindung ist das Klemmelement ein vom freien Gurtbandende umschlungener Haltesteg, welcher aus der Lösestellung über einen im Spannhebel angebrachten Klemmsteg hinweg in die Klemmstellung bewegbar ist. Vorzugsweise ist im Spannhebel ein zweiter Klemmsteg so angebracht, dass der verschiebbare Haltesteg in der Klemmstellung zwischen dem ersten und dem zweiten Klemmsteg liegt. Ein zusätzliches Halten des Klemmelements in der Klemmstellung lässt sich dadurch erreichen, dass der erste Klemmsteg an der dem Haltssteg bzw. dem Gurtband zugewandten Seite mindestens eine Haltenase angebracht ist. Eine bequeme Bedienbarkeit des Klemmelements kann dadurch erreicht werden, dass der verschiebbare Haltesteg in einem Klemmschieber angeordnet ist, der in seitlichen Führungsnuten des Spannhebels geführt ist, sowie durch einen Verlauf der Führungsnuten des Spannhebels in einem Winkel α zur Längsachse des Spannhebels und Ausstattung des Klemmschiebers mit einem Griffstück. Der abgewinkelte Verlauf der Führungsnuten sorgt dafür, dass das Griffstück des Klemmschiebers in deutlichem Abstand unter dem Handgriff des Spannhebels verläuft und somit eine bequeme Handhabung gewährleistet ist.

Ein Ausführungsbeispiel der Erfindung wird anhand der beigefügten Zeichnungen näher erläutert. Es zeigen:
- Fig. 1: eine Schnittansicht einer Gurtschnalle für Befestigungsgurte. Die Gurtschnalle befindet sich in der völlig geöffneten Ausgangslage;
- Fig. 2: eine perspektivische Ansicht eines in der Gurtschnalle nach Fig. 1 vorgesehenen Spannhebels;
- Fig. 3: den Spannhebel nach Fig. 1 in einer perspektivischen Unteransicht; und
- Fig. 4: eine perspektivische Ansicht eines in die Gurtschnalle nach Fig. 1 integrierten Klemmschiebers.

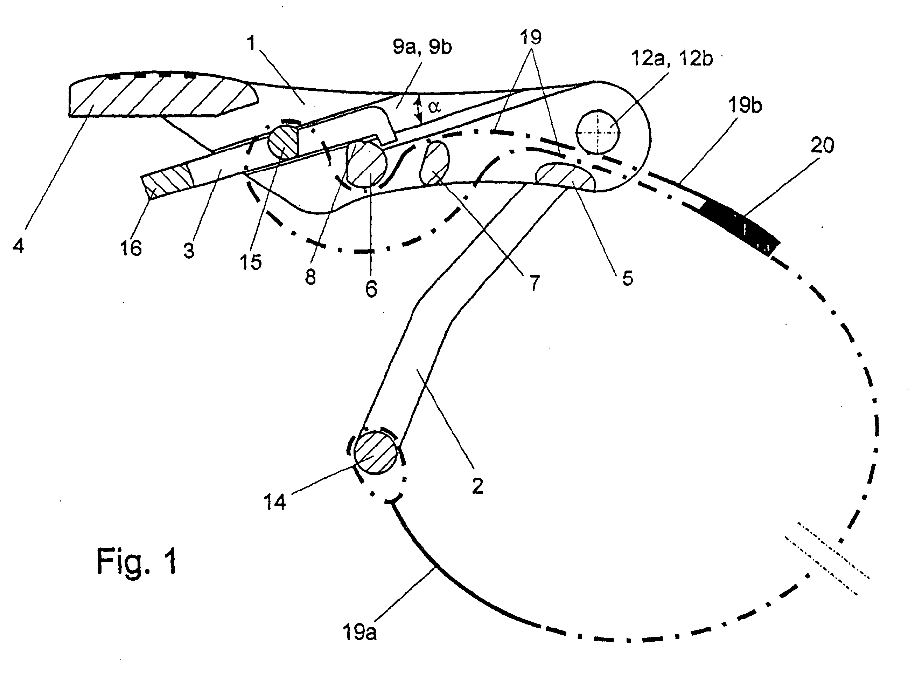

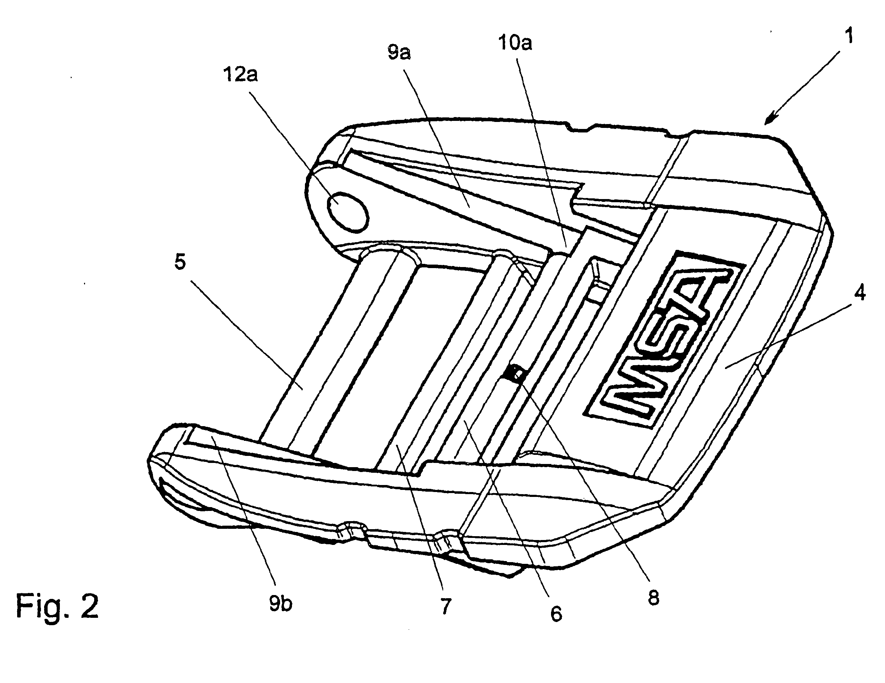

Die Gurtschnalle für Befestigungsgurte gemäß den Fig. 1 bis 4 umfasst einen flachen, in der Draufsicht U-förmigen Spannhebel 1, einen Spannbügel 2 und einen Klemmschieber 3.

Der aus hartem Kunststoff gefertigte Spannhebel 1 ist mit einem Handgriff 4, einem die beiden seitlichen Schenkel verbindenden Verbindungssteg 5 sowie einem ersten und einem zweiten Klemmsteg 6 und 7 ausgestattet. Der Klemmsteg 6 ist mittig mit einer kleinen Haltenase 8 versehen. In die seitlichen Schenkel des Spannhebels 1 sind Führungsnuten 9a und 9b eingearbeitet, die mit der Längsachse des Spannhebels 1 einen Winkel α bilden. Der Spannhebel 1 ist beiderseitig mit einem Anschlag 10a bzw. 10b ausgerüstet. An den beiden Schenkeln des Spannhebels 1 sind außen zwei Arretierungsnasen 11a und 11b angebracht. An den Schenkelenden des Spannhebels 1 befinden sich zwei Spannbügellager 12a und 12b, in welchen der Spannbügel 2 verschwenkbar gelagert ist. Zu diesem Zweck sind die Enden der beiden parallelen Schenkel 13a und 13b des ebenfalls U-förmigen Spannbügels 2 um 90° nach innen gebogen. Der Spannbügel 2 ist aus Rundstahl gefertigt, seine beiden parallelen Schenkel 13a und 13b sind abgewinkelt ausgebildet und der Spannbügel 2 ist mit einem Querschenkel 14 versehen. Der ebenfalls U-förmige Klemmschieber 3 ist auch aus hartem Kunststoff gefertigt und mit einem Haltesteg 15 und einem Griffstück 16 versehen. Die freien Enden der beiden Schenkel 17a und 17b des Klemmschiebers 3 sind mit zwei nach unten gebogenen kleinen Anschlagnasen 18a und 18b versehen. Ein Gurtband 19 wird mit einem fixierten Ende 19a am Querschenkel 14 des Spannbügels 2 befestigt, während das variable Ende 19b mit einem Klettband 20 versehen ist und in die Gurtschnalle eingefädelt wird.

Das variable Ende 19b des Gurtbands 19 wird über den Verbindungssteg 5 nach unten geführt und unterquert den ersten und zweiten Klemmsteg 6 und 7 des Spannhebels 1. Im gelösten Zustand des Klemmschiebers unterquert das Gurtband 19 den Haltesteg 15 des Klemmschiebers 3, es wird nach oben um den Haltesteg 15 des Klemmschiebers 3 herumgeführt und ändert damit seine Laufrichtung. Es wird dann wieder nach unten geführt, um den ersten Klemmsteg 6 des Spannhebels 1 ein zweites Mal zu unterqueren. Das Gurtband 19 wird wieder nach oben geführt und verlässt den Spannhebel 1 durch Überquerung des zweiten Klemmstegs 7 und des Verbindungsstegs 5. Das variable Ende 19b des Gurtbands 19 verläuft nun antiparallel zu dem in die Gurtschnalle eintretenden Gurtband 19, auf dem es durch ein handelsübliches Klettband 20 befestigt wird.

Mit dem Griffstück 16 des Klemmschiebers 3 lässt sich dieser in den Führungsnuten 9a und 9b des Spannhebels 1 bewegen. Wird der Klemmschieber 3 in die geöffnete Ausgangslage gezogen, so verhindern die in den Führungsnuten 9a und 9b gleitenden Anschlagnasen 18a und 18b eine Bewegung des Klemmschiebers 3 über die Anschläge 10a und 10b des Spannhebels 1 hinaus. Die Anordnung der Führungsnuten 9a und 9b unter dem Winkel α zur Längsachse des Spannhebels 1 sorgt dafür, dass das Griffstück 16 des Klemmschiebers 3 nicht dicht unter dem Handgriff 4 des Spannhebels 1 verläuft, sondern einen Abstand bewahrt, der eine bequeme Bedienung gewährleistet.

Mit dem Griffstück 16 kann der Klemmschieber 3 in die Klemmstellung geschoben werden. Der Klemmschieber 3 bewegt sich dabei entlang der beschriebenen Führungsnuten 9a und 9b in die Richtung der Spannbügellager 12a und 12b. Die Klemmstellung ist erreicht, wenn der Haltesteg 15 des Klemmschiebers 3 über den ersten Klemmsteg 6 des Spannhebels 1 geschoben wurde. Die kleine, auf dem ersten Klemmsteg 6 des Spannhebels 1 mittig angebrachte Haltenase 8 sorgt für das Halten des Klemmschiebers 3 in dieser Position, damit ein Zurückgleiten des Klemmschiebers 3 entlang der Führungsnuten 9a und 9b bei eingefädelten Gurtband 19 nur durch einen kräftigen Zug am Griffstück 16 des Klemmschiebers 3 erfolgen kann.

In der Klemmstellung des Klemmschiebers 3 ist der Verlauf des variablen Endes 19b des Gurtbands 19 zunächst ähnlich wie im geöffneten Zustand: Es wird über den Verbindungssteg 5 nach unten geführt und unterquert den ersten und zweiten Klemmsteg 6 und 7 des Spannhebels 1. Um den ersten Klemmsteg 6 wird es herum nach oben geführt und ändert seine Laufrichtung nach schräg oben in Richtung der Spannbügellager 12a und 12b. Das Gurtband 19 überquert den Haltesteg 15 des Klemmschiebers 3, verläuft um ihn herum und sodann schräg nach unten in Richtung des Handgriffs 4 des Spannhebels 1, um den ersten Klemmsteg 6 des Spannhebels 1 ein zweites Mal zu unterqueren. Zwischen dem ersten und dem zweiten Klemmsteg 6 bzw. 7 des Spannhebels 1 wird das Gurtband nach oben geführt, um den Spannhebel 1 durch Überqueren des zweiten Klemmstegs 7 und des Verbindungsstegs 5 zu verlassen.

Durch das Verschieben des Klemmschiebers 3 in die Klemmstellung verlängert sich die Weglänge des Gurtbands 19 durch die Gurtschnalle, so dass ein in der geöffneten Position des Klemmschieber 3 durch Zug am variablen Ende 19b des Gurtbandes 19 vorgespanntes Gurtband 19 durch ein Verschieben des Klemmschiebers 3 in die Klemmstellung nachgespannt wird.

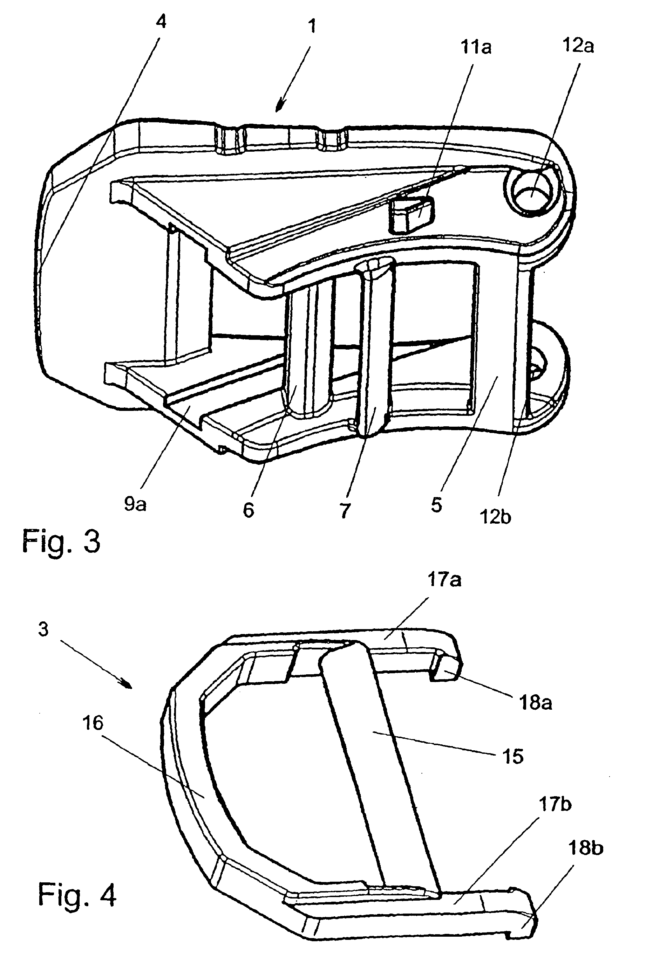

Befindet sich der Klemmschieber 3 in der eingeschobenen Klemmposition, so bewirkt ein vollständiges Schließen der Gurtschnalle durch ein Zusammendrücken des Handgriffs 4 des Spannhebels 1 mit dem Querschenkel 14 des Spannbügels 2 ein weiteres Nachspannen des durch den Klemmschieber 3 fixierten Gurtbandes 19. Zur Arretierung der Gurtschnalle in dieser vollständig geschlossenen Position dienen die jeweils seitlich am Spannhebel 1 angebrachten Arretierungsnasen 11a und 11b. Fig. 3 zeigt eine perspektivische Unteransicht des Spannhebels 1, bei der die genaue Position der Arretierungsnasen 11a und 11b auf einer Seite zu erkennen ist. Der Spannbügel 2 muss die beiderseitig angebrachten Arretierungsnasen 11a und 11b überwinden. Die beiden parallelen Schenkel 13a und 13b des Spannbügels 2 besitzen einen solchen Abstand, dass die Überwindung der Arretierungsnasen 11a und 11b nicht ohne einen Kraftaufwand beim Zusammendrücken des Handgriffs 4 des Spannhebels 1 mit dem Querschenkel 14 des Spannbügels 2 vonstatten geht. In dem Moment, wenn die parallelen Schenkel 13a und 13b des Spannbügels 2 die Arretierungsnasen 11a und 11b überwinden, wird der Spannbügel 2 geringfügig aus seinen Spannbügellagern 12a und 12b gedrückt, ohne diese zu verlassen. Unmittelbar nach Überwindung der Arretierungsnasen 11a und 11b gleitet der Spannbügel 2 wieder in die Spannbügellager 12a und 12b zurück. Auf diese Weise ist sowohl für das Zusammendrücken als auch für das Auseinanderziehen des Spannhebels 1 und des Spannbügels 2 ein gewisser Kraftaufwand erforderlich, der für die Arretierung der zusammengeklappten Gurtschnalle sorgt. Die parallelen Schenkel 13a und 13b des Spannbügels 2 sind darüber hinaus derart abgewinkelt, dass der Handgriff 4 des Spannhebels 1 und der Querschenkel 14 des Spannbügels 2 auch im zuammengeklappten Zustand der Gurtschnalle nicht dicht beieinander liegen, sondern einen Abstand besitzen. Dies ermöglicht eine bequeme Bedienbarkeit des Spannhebels 1 und gestattet die einfache Betätigung des Klemmschiebers 3, dessen Griffstück 16 im geöffneten Zustand des Klemmschiebers 3 zwischen dem Handgriff 4 des Spannhebels 1 und dem Querschenkel 14 des Spannbügels 2 liegt.

Das Griffstück 16 des Klemmschiebers 3 liegt im zusammengeklappten Zustand der Gurtschnalle unter dem Handgriff 4 des Spannhebels 1 und ist damit gegen ein ungewolltes Verschieben geschützt. Bei eingefädeltem Gurtband 19 sind alle Teile der Gurtschnalle so miteinander verbunden, dass sie nicht verloren gehen können.

### BEZUGSZEICHENLISTE

- 1: Spannhebel
- 2: Spannbügel
- 3: Klemmschieber
- 4: Handgriff von1
- 5: Verbindungssteg von 1
- 6: erster Klemmsteg von 1
- 7: zweiter Klemmsteg von 1
- 8: Haltenase von 6
- 9a, 9b: Führungsnuten von 1
- 10a, 10b: Anschlag von 1
- 11a, 11b: Arretierungsnasen von 1
- 12a, 12b: Spannbügellager von 1
- 13a, 13b: parallele Schenkel von 2
- 14: Querschenkel von 2
- 15: Haltesteg von 3
- 16: Griffstück von 3
- 17a, 17b: Schenkel von 3
- 18a, 18b: Anschlagnasen von 3
- 19: Gurtband
- 19a, 19b: fixiertes, bzw. variables Ende von 19
- 20: Klettband

## Patentansprüche

1. Gurtschnalle für Befestigungsgurte bestehend aus einem Spannhebel (1), an dem das freie Gurtbandende (19b) über einen Klemmsteg (6) verklemmbar ist und einem an dem Spannhebel (1) schwenkbar gehaltenen Spannbügel (2), an dem das andere Gurtbandende (19a) fixiert ist,
**dadurch gekennzeichnet, dass**
an dem Spannhebel (1) ein bewegliches Klemmelement angeordnet ist, das in eine Klemmstellung bewegbar ist, in der das Gurtband (19) zwischen dem Klemmelement und dem Spannhebel (1) verklemmt ist, sowie in eine Lösestellung bewegbar ist, bei der das Gurtband (19) im wesentlichen frei zwischen dem Klemmelement und dem Spannhebel (1) verläuft.

2. Gurtschnalle nach Anspruch 1, **dadurch gekennzeichnet, dass** das Klemmelement ein in dem Spannhebel (1) nahe oberhalb des Klemmsteges (6) verschiebbar angeordneter, von dem freien Gurtbandende (19b) umschlungener Haltesteg (15) ist, der von der Lösestellung über den im Spannhebel (1) angebrachten Klemmsteg (6) über einen Totpunkt hinweg in die Klemmstellung bewegbar ist.

3. Gurtschnalle nach Anspruch 2, **dadurch gekennzeichnet, dass** in Einschieberichtung des beweglichen Haltestegs (15) nach dem ersten Klemmsteg (6) im Spannhebel (1) ein zweiter Klemmsteg (7) befestigt ist, wobei sich der zweite Klemmsteg (7) unterhalb der Gurtschleife befindet und der verschiebbare Haltesteg (15) in der Klemmstellung zwischen dem ersten (6) und dem zweiten Klemmsteg (7) liegt.

4. Gurtschnalle nach Anspruch 2 und 3, **dadurch gekennzeichnet, dass** der verschiebbare Haltesteg (15) in einem Klemmschieber (3) angeordnet ist, der in seitlichen Führungsnuten (9a, 9b) des Spannhebels (1) geführt ist.

5. Gurtschnalle nach Anspruch 4, **dadurch gekennzeichnet, dass** der Klemmschieber (3) in der Lösestellung an Anschlagen (10a, 10b) in den Führungsnuten gehalten ist.

6. Gurtschnalle nach Anspruch 4 und 5, **dadurch gekennzeichnet, dass** an dem Klemmschieber (3) ein Griffstück (16) vorgesehen ist.

7. Gurtschnalle nach Anspruch 4 und 5, **dadurch gekennzeichnet dass**, die Führungsnuten (9a, 9b) in einem Winkel α zur Längsachse des Spannhebels (1) verlaufen.

8. Gurtschnalle nach einem der Ansprüche 1 bis 7, **dadurch gekennzeichnet, dass** der erste Klemmsteg (6) an der dem Klemmschieber (3) bzw. dem Gurtband (19) des Befestigungsgurtes zugewandten Seite mindestens eine Haltenase (8) aufweist.

9. Gurtschnalle nach einem der Ansprüche 1 bis 8, **dadurch gekennzeichnet, dass** der Haltesteg (15) im Querschnitt kreissegmentförmig ausgebildet ist, wobei die abgeflachte Seite zum Einschubende des Klemmschiebers (3) hinweist.

10. Gurtschnalle nach einem der vorhergehenden Ansprüche, **dadurch gekennzeichnet, dass** der Klemmschieber (3) und der Spannhebel (1) jeweils einstückig aus Kunststoff oder Metall gefertigt sind.

11. Gurtschnalle nach Anspruch 1, **dadurch gekennzeichnet, dass** das Klemmelement als Klemmschieber mit einem Griffstück und dem vom freien Gurtbandende umschlungenen Klemmsteg ausgebildet ist und der Spannhebel gegenüberliegende Klemmbacken aufweist, wobei das Gurtband in der Klemmstellung zwischen den Klemmbacken und dem Klemmsteg verklemmt ist.

## Claims

1. A buckle for a fastening strap consisting of a tightening lever (1) to which the free end of the strap (19b) can be clamped using a clamping web (6) and a tightening arm (2) pivotably attached to the tightening lever (1) to which the other strap end (19a) is fastened,
**characterized in that**
a movable clamping member that can be moved into a clamping position in which the strap (19) is clamped between the clamping member and the tightening lever (1) and into a release position in which the strap (19) runs virtually free between the clamping member and the tightening lever (1) is provided on the tightening lever (1).

2. The buckle according to claim 1, **characterized in that** the clamping member is a holding web (15) that is movably mounted in the tightening lever (1) above the clamping web (6) and embraced by the free strap end (19b), and **in that** said holding web (15) can be moved from a release position across the clamping web (6) in the tightening lever (1) and over a dead center into its clamping position.

3. The buckle according to claim 2, **characterized in that** a second clamping web (7) is arranged in slide-in direction of the movable holding web (15) after the first clamping web (6), said second clamping web (7) being located under the strap loop and the movable holding web (15) being positioned between the first (6) and the second clamping web (7) in clamping position.

4. The buckle according to claims 2 and 3, **characterized in that** the movable holding web (15) is placed in a clamping slider (3) that is guided in the lateral guiding grooves (9a, 9b) of the tightening lever (1).

5. The buckle according to claim 4, **characterized in that** the clamping slider (3) is held to the stoppers (10a, 10b) in the guiding grooves when in release position.

6. The buckle according to claims 4 and 5, **characterized in that** a grip piece (16) is provided on the clamping slider (3).

7. The buckle according to claims 4 and 5, **characterized in that** the guiding grooves (9a, 9b) run at an angle α to the longitudinal axis of the tightening lever (1).

8. The buckle according to any one of claims 1 through 7, **characterized in that** the first clamping web (6) comprises at least one holding lug (8) on the side facing the clamping slider (3) or the strap (19) of the fastening strap arrangement, respectively.

9. The buckle according to any one of claims 1 through 8, **characterized in that** the holding web (15) has a cross section shaped like a segment of a circle, its flat side facing the slide-in end of the clamping slider (3).

10. The buckle according to any one of the preceding claims, **characterized in that** the clamping slider (3) and the tightening lever (1) are each made in one piece of plastic or metal.

11. The buckle according to claim 1, **characterized in that** the clamping member is designed as a clamping slider with a grip piece and a clamping web embraced by the free strap end and that the tightening lever comprises opposing clamping jaws, the strap being clamped in clamping position between these clamping jaws and the clamping web.

## Revendications

1. Boucle de sangle pour sangles de fixation, comprenant un levier de tensionnement (1) au niveau duquel l'extrémité libre (19b) de la sangle peut être coincée au moyen d'une barrette de coincement (6), et un étrier de tensionnement (2) maintenu en pivotement sur le levier de tensionnement (1), et au niveau duquel l'autre extrémité (19a) de la sangle est fixée,
**caractérisée en ce que**
sur le levier de tensionnement (1) est agencé un élément de coincement mobile, qui peut être déplacé dans une position de coincement dans laquelle la bande de sangle (19) est coincée entre l'élément de coincement et le levier de tensionnement (1), et qui peut être déplacé dans une position de libération dans laquelle la bande de sangle (19) s'étend essentiellement libre entre l'élément de coincement et le levier de tensionnement (1).

2. Boucle de sangle selon la revendication 1, **caractérisée en ce que** l'élément de coincement est une barrette de maintien (15) enveloppée par l'extrémité libre (19b) de la sangle et agencée de façon mobile dans le levier de tensionnement (1) à proximité au-dessus de la barrette de coincement (6), barrette de maintien qui peut être amenée à partir de la position de libération jusque dans la position de coincement via une barrette de coincement (6) montée dans le levier de tensionnement (1), en dépassant un point mort.

3. Boucle de sangle selon la revendication 2, **caractérisée en ce que**, dans la direction d'enfilement de la barrette de maintien mobile (15) après la première barrette de coincement (6) dans le levier de tensionnement (1), est fixée une seconde barrette de coincement (7), ladite barrette de coincement (7) se trouvant au-dessous de la boucle de sangle et la barrette de maintien mobile (15) se trouve dans la position coincée entre la première barrette de maintien (6) et la seconde barrette de maintien (7).

4. Boucle de sangle selon la revendication 2 et 3, **caractérisée en ce que** la barrette de maintien mobile (15) est agencé dans un tiroir de coincement (3) qui est guidé dans des gorges de guidage latérales (9a, 9b) du levier de tensionnement.

5. Boucle de sangle selon la revendication 4, **caractérisée en ce que** le tiroir de coincement (3) est maintenu, dans la position libérée, contre des butées (10a, 10b) dans les gorges de guidage.

6. Boucle de sangle selon les revendications 4 et 5, **caractérisée en ce qu'**il est prévu une pièce de préhension (16) sur le tiroir de coincement (3).

7. Boucle de sangle selon les revendications 4 et 5, **caractérisée en ce que** les gorges de guidage (9a, 9b) s'étendent sous un angle α par rapport à l'axe longitudinal du levier de ce tensionnement (1).

8. Boucle de sangle selon l'une des revendications 1 à 7, **caractérisée en ce que** la première barrette de coincement (6) comporte au moins un bec de maintien (8) sur le côté tourné vers le tiroir de coincement (3) ou vers la bande de ceinture (19) de la sangle de fixation.

9. Boucle de sangle selon l'une des revendications 1 à 8, **caractérisée en ce que** la barrette de maintien (15) est réalisée en forme de segment de cercle en section transversale, de sorte que le côté aplati est dirigé vers l'extrémité d'entrée du tiroir de coincement.

10. Boucle de sangle selon l'une des revendications précédentes, **caractérisée en ce que** le tiroir de coincement (3) et le levier de tensionnement (1) sont respectivement fabriqués d'une seule pièce en matière plastique ou en métal.

11. Boucle de sangle selon la revendication 1, **caractérisée en ce que** l'élément de coincement est réalisé sous la forme de tiroir de coincement avec une pièce de préhension et avec la barrette de coincement entourée par l'extrémité libre de la sangle, et le levier de tensionnement comprend des mâchoires de coincement opposées, ladite sangle étant coincée dans la position de coincement entre les mâchoires de coincement et la barrette de coincement.
